# EUROPEAN PATENT APPLICATION

(11) **EP 4 722 517 A2**
(43) Date of publication of application: **08.04.2026**
(21) Application number: 25201604.3
(22) Date of filing: 11.09.2025
(51) Int. Cl.: F02C 7/232, F02C 9/26

(54) **VARIABLE DISPLACEMENT PUMP METERING CONTROL WITH UPSTREAM FUEL SHUT-OFF**

(30) Priority: 12.09.2024 US 202418883100
(71) Applicant: Hamilton Sundstrand Corporation, Charlotte, NC 28217-4578 (US)
(72) Inventor: SUSCA, Ryan, Windsor, 06095 (US); JOHNSON, Wayne, West Hartford CT, 06119 (US)
(74) Representative: Dehns

(57) **Abstract**

A fuel system (200) for managing the flow of fuel to an engine having a metering valve (201), a bypass valve (211), and a shutoff valve. The system is configured to allow a primary flow of fuel in a first state to flow through the shutoff valve to the metering valve and out to an output line. In a second state the fuel system is configured to shut off the primary flow at the shutoff valve and metering valve to prevent the primary flow from traveling to the output line. The bypass valve is configured to receive the primary flow and is closed in the first state. In the second state, the metering valve closes, opening a window (220) for a secondary flow path to a return line (237). When fuel flows through the secondary flow path the bypass valve opens. Wherein when the bypass valve is open the primary flow flows through the bypass valve to a return line. In addition, the bypass valve provides a secondary flow path to the shutoff valve which closes the shutoff valve.

## Description

### BACKGROUND

Fuel delivery systems must perform many functions to satisfy aircraft engine (e.g., gas turbine engine) requirements. Traditionally, these systems rely on pumps that exceed required capability for much of the operational envelope, either bypassing or throttling the excess flow/pressure which results in large parasitic power draw. Additionally, these systems usually rely on sets of electromechanical interconnect devices and valves to perform functions such as shutoff, flow selection, etc.

Such conventional methods and systems have generally been considered satisfactory for their intended purpose. However, there is still a need in the art for improved fuel systems. The present disclosure provides a solution for this need.

### SUMMARY

An improved system is provided wherein the system operates with the metering valve located downstream from the shutoff valve. By placing the shutoff valve on the same output from the pump as the bypass valve, the system may eliminate unstable operation. The bypass valve and the shutoff valve receive a primary input from a pump. In a first state, the bypass valve is closed and the shutoff valve is open. This allows fuel to flow from the pump to the metering valve. A secondary flow path is further provided by the pump to a secondary input to control the bypass valve and the metering valve. When the metering valve receives an input from, for example an engine electronic control (EEC), the metering valve may close. In a closed position the metering valve may open a window for the secondary flow path to a return line. The secondary flow path may have an orifice which, when the metering valve allows the secondary flow path to flow to the return line, causes a pressure drop lowering the pressure on the bypass valve secondary input. When the pressure at the secondary input is reduced, the bypass valve may open, allowing the primary flow to flow to the return line. In addition, the primary flow may also be provided by the bypass valve to a secondary input of the shutoff valve. The secondary input may cause the shutoff valve to close. Thus, in a first state, the bypass valve will be closed, while the shutoff valve and the metering valve are open. In a second state, the bypass valve will be open, and the metering valve and the shutoff valve will be closed. Alternatively, a solenoid may control the bypass valve possibly by receiving a signal from an EEC.

In a further embodiment, the metering valve may be replaced with a fuel sensing valve. The primary flow now may pass through the shutoff valve to the fuel sensing valve. In addition, the primary flow is provided to the bypass valve. The bypass valve may be in a closed position in the first state. In the first state the shutoff valve and the fuel sensing valve may be in an open position. The bypass valve may also receive a secondary flow that is provided to a control input of the bypass valve and a solenoid. In the second embodiment an EEC may send a signal to a control the solenoid to shut off the fuel flow with the minimum pressure shutoff valve (MPSOV). When the bypass valve opens, the primary flow may pass through the bypass valve to a return line. In addition, the bypass valve may provide an input to a control for the shutoff valve to close the shutoff valve in a similar manner to the first embodiment.

### BRIEF DESCRIPTION OF THE DRAWINGS

FIG. 1 is a schematic diagram of a prior art embodiment of a fuel system.
FIG. 2 illustrates an improved system wherein the MPSOV is located upstream of the metering valve.
FIG. 3 illustrates another improved system wherein the MPSOV is located upstream of the metering valve.

### DETAILED DESCRIPTION

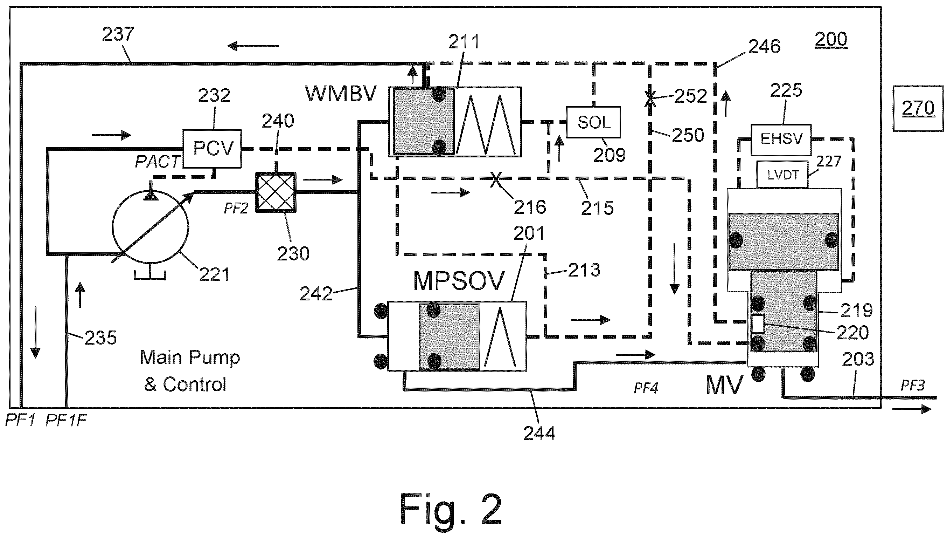

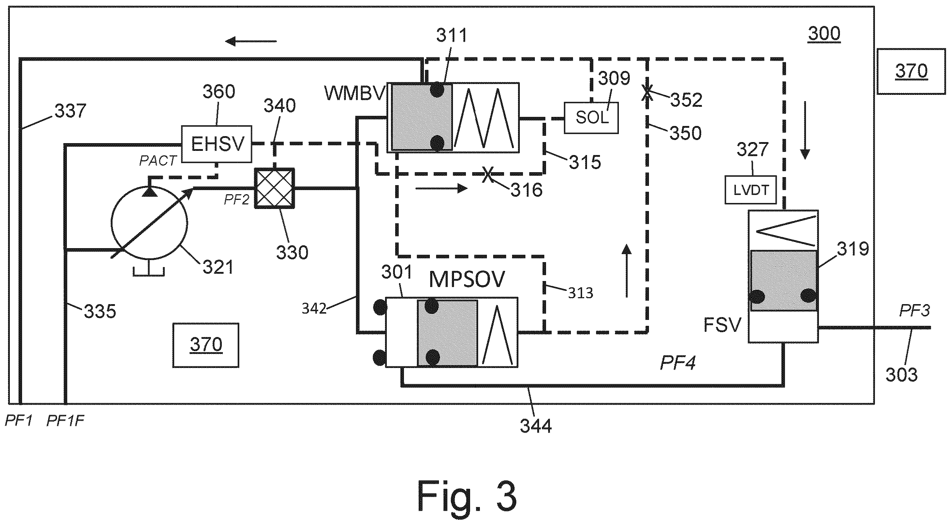

Reference will now be made to the drawings wherein like reference numerals identify similar structural features or aspects of the subject disclosure. For purposes of explanation and illustration, and not limitation, an illustrative view of an embodiment of a fuel system in accordance with the disclosure is shown in FIGS. 2 & 3.

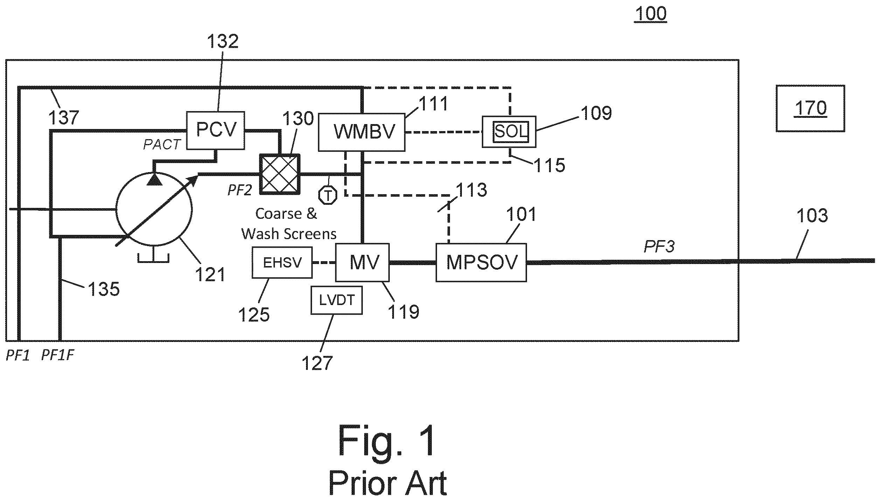

FIG. 1 illustrates a prior art fuel system 100 which may include an MPSOV 101 configured to allow a primary flow to pass therethrough in normal operation, such that the primary flow can travel to an output line 103. The MPSOV 101 can also be configured to shut off the primary flow in a second state (e.g., a shutoff/secondary operation) to prevent the primary flow from traveling to the output line 103.

Fuel enters the system via input 135 to a variable displacement pump 121. Pump 121 provides an output to filter 130. The filtered fuel may be provided to pump control valve (PCV) 132. PCV 132 may receive an input from an EEC 170. The wash flow from filter 130 may be provided to metering valve (MV) 119 which provides fuel to MPSOV 101. Filter 130 further provides wash flow to a bypass valve 111, e.g., a windmill bypass valve (WMBV) 111.

MV 119 may be operatively connected to a filter 130 which delivers the output of pump 121 to MV119. MV 119 delivers the output at a set pressure to MPSOV 101. The MV 119 can be configured to reduce the pump pressure to a primary pressure as a function of its position to meter flow to the MPSOV 101. In addition, MV 119 may be fluidly connected to WMBV 111 and solenoid 109. Wherein solenoid 109 provides an input to control WMBV 111.

In certain embodiments, the MV 119 can be controlled by an electrohydraulic servo valve 125 (EHSV) configured to control a position of the metering valve 119 between a first metering valve state and a second metering valve state. The position of MV 119 may be determined by a linear variable differential transducer (LVDT) 127 which may be relayed to an EEC 170. The EHSV 125 can be configured to receive inputs from the EEC 170 , and to output control signals to MV 119 (e.g., as appreciated by those having ordinary skill in the art of EHSVs).

MPSOV 101 further receives an input from bypass line 113 from WMBV 111. In the second state, the MPSOV 101 can be configured to communicate in fluid communication with a bypass valve 111, e.g., a windmill bypass valve (WMBV) 111, via a bypass line 113. In the second state, the MPSOV 101 can be configured to prevent fluid from flowing to output 103. When WMBV 111 is open, fuel from filter 130 may provide an output to a return line 137 to the fuel source. In addition, WMBV 111 may further be fluidly connected to solenoid 109. Solenoid 109 may also receive the wash flow from filter 130 through line 115.

The output of pump 121 may be provided through filter 130 to PCV 132. The PCV 132 may be fluidly connected to input 135 from the fuel source. PCV 132 may operate pump 121.

Greater detail of prior art systems is illustrated in U.S. Patent 11,859,551 to O'Rorke et al and in U.S. Publication 2022/0372941 to Susca et al.. While the description of FIG. 1 may be an overview of a prior art system, the systems shown in the above named patent and publication provide greater detail of the prior art.

Sequencing of the WMBV 111 and the MPSOV 101 may be difficult to achieve during all operating regimes. Typically, the WMBV 111 and MPSOV 101 do not operate at the same pressures because the MPSOV 101 is downstream of the WMBV 111 and the MPSOV 101 may inadvertently "burp" during low rpm motoring (start up or shut down). FIG. 2 illustrates an improved system wherein the MPSOV 201 is located upstream of the metering valve 219 and is fluidly parallel to the WMBV 211. This allows for the MPSOV 201 and WMBV 211 to operate at the same pressure and establish a differential in their output pressures. Improved fuel control 200 incorporates a novel configuration that allows for improved operation.

Fuel control system 200 incorporates a variable displacement pump 221 which receives an input 235 from a fuel source. The variable displacement pump 221 provides an output to a filter 230. The output of the filter 230 provides a filtered output 240 and a wash flow 242. The wash flow 242 is provided to both a WMBV 211 and an MPSOV 201. The filtered output 240 is provided to pump control valve 232 and a second input of metering valve 219. Pump 221 may be attached to the shaft of the engine (not shown) and therefore may not be able to shut off. As a result, there is a need to provide a means to shut off flow.

During normal operation MPSOV 201 allows for wash flow 242 to pass through to metering valve 219. Metering valve 219 allows for wash flow 242 to pass through metering valve 219 to output 203 which may be provided to the engine. WMBV 211 is in a closed state preventing the flow of fuel to return line 237. Pump 221 may be attached to the shaft of the engine and therefore may not be able to shut off. As a result, there is a need to provide a means to shut off flow to output 203.

The LVDT 227 measures the position of metering valve 219. Sensors may measure the pressure and flow PF3 at the output 203, and the pressure and flow PF4 at the input to the metering valve 219. Pressures and flows PF3 and PF4, along with the output from LVDT 227 may be provided to an EEC 270. The EEC 270 may provide a control signal to an EHSV 225 to control the metering valve 219. PCV 232 may sense the pressures PF3 and PF4, which allows the PCV 232 to passively control pump 221. By controlling metering valve 219 and pump 221 the system is able to control the fuel output 203.

When metering valve 219 is in an open position, the wash flow 244 passes through the metering valve 219 to output 203. When metering valve 219 closes, the flow 244 from MPSOV 201 may be stopped by metering valve 219 to output 203. In addition, metering valve 219 opens window 220 to provide a path for fuel from filtered output 240 to pass through line 215 to control line 246. When fuel is able to flow though line 215, the fuel passes from line 240, through an orifice 216, thus causing pressure to drop on line 215 from line 240. Line 215 may be provided to the back side of WMBV 211. When the pressure on the back side of WMBV 211 drops, WMBV 211 opens.

When WMBV 211 opens, wash flow 242 passes through WMBV 211 to return line 237 which allows the wash flow 242 to return to the fuel supply. The pressure and flow at the return to the fuel supply is defined as PF1, with PF indications a pressure and flow sensor. This fuel may then be circulated back in input 235. The pressure at the input to line 235 may be at pressure and flow PF1F. In addition to the flow from WMBV 211 to return line 237, WMBV provides fuel though line 213 to the back side of MPSOV 201 to assist in closing MPSOV 201. Line 213 further connects to return line 237 through line 250. To maintain a controlling pressure on the backside of MPSOV 201, an orifice 252 may be introduced into line 250. During normal operation the flow through line 215 is minimal, and as a result the pressure and flow on line 215 may be equal to PF2. It is only when metering valve 219 moves to a closed position that flow results, thus resulting in a pressure drop across orifice 216.

A solenoid 209 may receive a control signal from EEC 270. When solenoid 209 opens, WMBV 211 may also open as a result of flow through solenoid 209 from line 215. As discussed earlier, as fuel flows across orifice 216, a pressure drop results which allows for WMBV 211 to open. As can be seen, when metering valve 219 closes as discussed above, the flow to output 203 will cease. However, in the event metering valve 219 does not operate properly or in addition to the operation of metering valve 219, when solenoid 209 may open WMBV 211. This will result in WMBV 211 opening and MPSOV 201 closing.

FIG. 3 illustrates another improved system 300 wherein the MPSOV 301 is located upstream of a fuel sensing valve 319. The system in FIG. 3 is similar in operation to FIG. 2, however the metering valve 219 is replaced with a fuel sensing valve 319. Fuel sensing valve 319 allows fuel to pass from line 344 to output 303 when open. LVDT 327 senses the position of fuel sensing valve 319. Pressure and flow sensors may measure the flow and pressure at PF3 and PF4 and provide the data to an EEC 370. EEC 370 provides an input to the EHSV 360 to control the pump 321 to adjust the fuel flow. It is possible that EEC 370 only receives the inputs of pressure PF3 and the and the position of LVDT 327 to provide a control signal.

Variable displacement pump 321 in FIG. 3 is now controlled by an EHSV 360 based on inputs from the EEC 370. Pump 321 provides fuel from fuel input 335 and outputs the fuel to filter 330. The filter 330 has a filtered output 340 which provides fuel to both the EHSV 360 and through an orifice 316 down line 315 to solenoid 309 and WMBV 311. When solenoid 309 is closed, there will be no fuel flow through line 315. As a result, there will not be a pressure drop across orifice 316, which will maintain WMBV 311 in a closed position.

Filter 330 further provides wash flow 342 directly to WMBV 311 and MPSOV 301. Both WMBV 311 and MPSOV 301 operate in a similar manner to those in FIG. 2, wherein during normal operation WMBV 311 is closed and MPSOV 301 is open. This allows for the wash flow 342 to pass through MPSOV 301 to fuel sensing valve 319.

The pressure and flow at the output 303 of fuel sensing valve 319 may be sensed which provides a control signal to EEC 370 which provides control signals to solenoid 309, fuel sensing valve 319 and pump 312. When solenoid 309 opens WMBV 311 will open and allow fuel to flow through line 313 causing MPSOV 301 to close. The fuel will flow through line 313 and out line 350 through orifice 352 to line 337. Orifice 352 will cause the pressure on line 313 to remain higher than the pressure on return line 337 to maintain MPSOV 301 in a closed position. Where the operation of the embodiment of FIG. 2 is based on the control of EHSV 225 resulting in hydraulic feedback through the system, the system of FIG. 3 is based on electronic controllers.

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or" as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either" "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fuel system (200), comprising:
a minimum pressure shutoff valve (201) configured to receive a primary flow from a pump (221) wherein the minimum pressure shutoff valve is configured to allow the primary flow to pass therethrough to a metering valve (219) in a first state and is configured to shut off the primary flow in a second state to prevent the primary flow from traveling to the metering valve; and
a metering valve (219) configured to receive the primary flow from the minimum pressure shutoff valve wherein the metering valve is configured to allow a primary flow having a primary flow pressure to pass therethrough in a first state such that the primary flow can travel to an output line, wherein the metering valve is configured to shut off the primary flow in a second state to prevent the primary flow from traveling to the output line.

2. The fuel system of claim 1, further comprising a bypass valve (211) configured to receive the primary flow, wherein the bypass valve is closed in the first state; and
wherein the bypass valve is open in the second state and is configured such that the primary flow can travel to a return line (237) in the second state when the fuel system is in operation; and optionally wherein the bypass valve is further configured to provide an input to the minimum pressure shutoff valve (201) in the second state to close the minimum pressure shutoff valve when the fuel system is in operation.

3. The fuel system of claim 1, further comprising a secondary flow line from the pump (221), wherein the secondary flow line is configured to provide a secondary flow to the metering valve (219), the metering valve comprising a window (220) and a return line (237), wherein the metering valve is configured to pass the secondary flow to the return line in the second state when the fuel system is in operation.

4. The fuel system of claim 2, further comprising a secondary flow line from the pump (221), wherein the secondary flow line is configured to provide a secondary flow to the metering valve (219), the metering valve comprising a window (220), wherein the metering valve is configured to pass the secondary flow to the return line (237) in the second state when the fuel system is in operation; and optionally wherein the secondary flow line further comprises an orifice (216), the secondary flow further being provided to the bypass valve (211), wherein the bypass valve is configured to open the bypass valve when fuel flows through the secondary flow line.

5. The fuel system of claim 2 further comprising a solenoid (209), wherein the solenoid is configured to open in the second state opening the bypass valve (211); and optionally wherein the solenoid is configured to receive an input from an electronic engine control.

6. The fuel system of claim 5, wherein the solenoid (209) is configured to open the bypass valve (211) and close the minimum pressure shutoff valve (201) in a second state.

7. The fuel system of claim 1, further comprising;
a pump control valve (232);
a first pressure sensor configured to sense the primary flow pressure; and
a second pressure sensor configured to sense an outflow pressure, wherein the pump control valve is configured to receive an output from the first pressure sensor and the second pressure sensor and control the pump (221).

8. A fuel system, comprising:
a minimum pressure shutoff valve (201) configured to receive a primary flow from a pump (221), wherein the minimum pressure shutoff valve will allow a primary flow to pass therethrough to a fuel sensing valve (219) in a first state when the fuel system is in operation, and shut off the primary flow in a second state to prevent the primary flow from traveling to the metering valve (219) when the fuel system is in operation; and
a fuel sensing valve (219) configured to receive the primary flow from the minimum pressure shutoff valve, wherein the fuel sensing valve is configured to allow the primary flow having a primary flow pressure to pass therethrough in the first state such that the primary flow can travel to an output line, and shut off the primary flow in the second state to prevent the primary flow from traveling to the output line when the fuel system is in operation.

9. The fuel system of claim 8, further comprising a bypass valve (211) configured to receive the primary flow, wherein the bypass valve is closed in the first state; and
wherein the bypass valve is open in the second state and is configured such that the primary flow can travel to a return line when the fuel system is in operation.

10. The fuel system of claim 9, wherein the bypass valve (211) is further configured to provide an input to the minimum pressure shutoff valve (201) in the second state to close the minimum pressure shutoff valve when the fuel system is in operation.

11. The fuel system of claim 9 or 10, further comprising a solenoid (209), the solenoid configured to open the bypass valve (211) in the second state when the fuel system is in operation.

12. The fuel system of claim 11, further comprising a secondary flow line from the pump to the bypass valve (211) and the solenoid (209).

13. The fuel system of claim 12, wherein the secondary flow line further comprises an orifice (216).

14. The fuel system of any of claims 11 to 13 wherein the solenoid (209) is configured to receive an input from an electronic engine control; and optionally wherein the fuel sensing valve (219) is configured to send an input to an electronic engine control.

15. The fuel system of any of claims 11 to 14, wherein the solenoid (209) is configured to open the bypass valve (211) and close the minimum pressure shutoff valve (201).
